# EUROPEAN PATENT APPLICATION

(11) **EP 0 571 714 A2**
(43) Date of publication of application: **01.12.1993**
(21) Application number: 93102531.6
(22) Date of filing: 18.02.1993
(51) Int. Cl.: G01B 11/24

(54) **Improvements in or relating to the measurement of the curvature of a surface**

(30) Priority: 27.05.1992 GB 9211233
(71) Applicant: ROKE MANOR RESEARCH LIMITED, Romsey, Hampshire, SO51 0ZN (GB)
(72) Inventor: Manning, Kevin Ross, Totton, Southampton SO4 3UW (GB); Mansbridge, John, Romsey, Hampshire SO51 7UJ (GB)
(74) Representative: Allen, Derek

(57) **Abstract**

A method of, and apparatus for, measuring the curvature of a specularly reflecting surface in which a beam of light is directed at the surface parallel to the optic axis of an optical element of which the surface forms part, the angle of reflection of the radiation reflected from the surface is determined by measuring the change in orientation of a rotatable mirror from a reference position required to cause the radiation reflected from the surface to be incident upon a detector and there is derived from the separation between the beam of radiation and the optic axis of an optical element of which the surface forms part and the measured angle of reflection of the beam of radiation a measure of the curvature of the surface.

## Description

The present invention relates to apparatus for the measurement of the curvature of a specularly reflecting surface, and more particularly to apparatus for the measurement of the curvature of a surface of a lens or a mirror.

In our co-pending application 92 05655.5 there is described an apparatus for measuring the curvature of a surface of a lens, consisting of a source of electromagnetic radiation and a lens arranged to focus upon a detector radiation reflected from the surface, wherein the detector is arranged to provide an output signal characteristic of a position thereon at which the reflected radiation is incident, and a signal processor responsive to the output signal from the detector for providing an indication of the curvature of the surface.

According to the present invention there is provided an apparatus for measuring the curvature of a specularly reflecting surface, comprising means for directing a beam of electromagnetic radiation upon a specularly reflecting surface the curvature of which is to be measured, a detector for radiation reflected from the said surface, means for focusing the said reflected radiation upon the detector, a reflecting element arranged to be rotatable about an axis which lies in a reflecting surface of the reflecting element, means for so moving the reflecting element as to cause the radiation reflected from the said surface to be incident upon the detector, means for measuring the angular deflection of the reflecting element from a reference position required to cause the reflected radiation to be incident upon the detector and providing position signals related thereto, and means for deriving therefrom a measure of the curvature of the said surface.

A suitable form of electromagnetic radiation is light, where the term 'light' embraces both the infra-red and ultraviolet regions of the electromagnetic spectrum and a convenient source of the radiation is a laser.

The rotatable reflecting element may comprise a mirror, which together with the means for moving the reflecting element and the means for measuring the angular deflection of the reflecting element from its reflecting position comprises a mirror assembly.

The source, mirror assembly and the detector may be mounted upon a platform which is adapted to be moved relative to an optic axis of an optical element of which the surface the curvature of which is to be measured forms part so as to enable the curvature of the total surface of the optical element to be determined.

There may be included means for determining the position of the said optic axis of the optical element of which the surface the curvature of which is to be measured forms part.

The means for determining the position of the optic axis of the optical element may comprise means for directing at the said surface a second beam of electromagnetic radiation parallel to the previously described beam of radiation and a radiation detector arranged to receive radiation reflected from the surface only when the second beam of radiation is coincident with the optic axis of the optical element.

The two beams of electromagnetic radiation may be derived from a single source via a beam splitter and a reflecting element.

Also according to the present invention there is provided a method of measuring the curvature of a specularly reflecting surface, comprising the operations of directing a beam of electromagnetic radiation at the specularly reflecting surface parallel to the optic axis of an optical element of which the surface forms part, intercepting radiation reflected from the surface with a rotatable reflecting element, varying the orientation of the rotatable reflecting element so as to cause the reflected beam of radiation to be incident upon a detector for the radiation, measuring the separation between the optic axis of the optical element of which the surface forms part and the beam of electromagnetic radiation and the angular deflection of the reflecting element from a reference position to determine the angle of reflection of the radiation from the surface, and deriving therefrom a measure of the curvature of the surface.

Embodiments of the invention will now be described by way of example, with reference to the accompanying drawings, in which,
Figure 1 is a representation of an apparatus embodying the invention for measuring the curvature of a surface of a lens,
Figure 2 is a representation of a second apparatus embodying the invention for measuring the curvature of a surface of a lens,
Figure 3 is a representation of a third apparatus embodying the invention for measuring the curvature of a surface of a lens,
Figure 4 is a representation of another apparatus embodying the invention for measuring the curvature of a surface of a lens,
Figure 5 is a schematic representation of an apparatus for determining the position of the optic axis of a symmetrical specularly reflecting surface automatically, and
Figure 6 is a representation of an apparatus for measuring the surface quality of an optical element as well as its curvature.

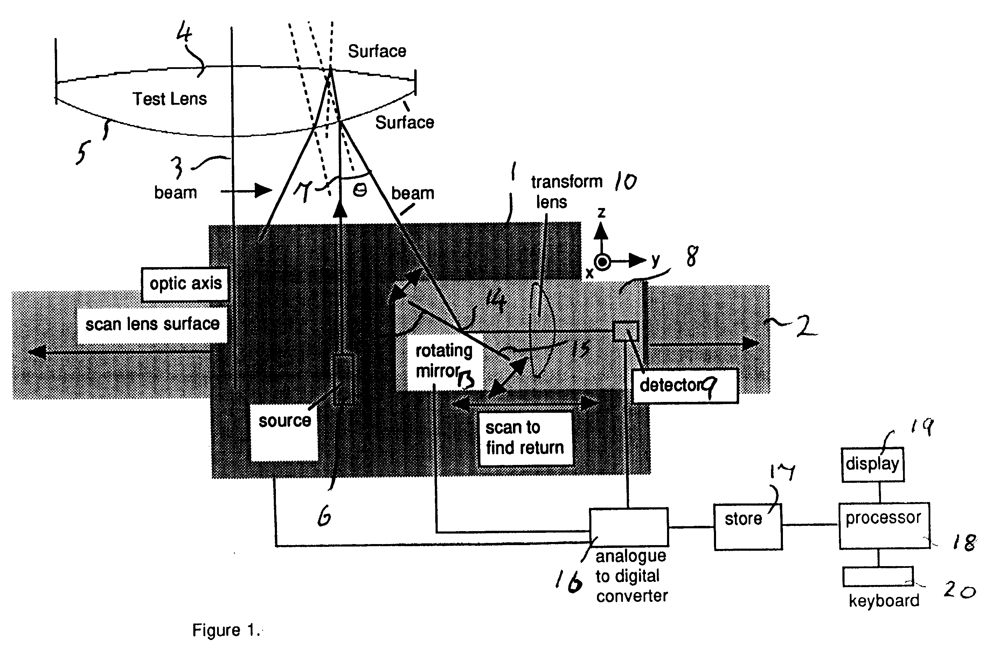

Referring to Figure 1, a first optical platform 1 is mounted upon an optical bench 2 so that it can be moved in three dimensions relative to an optic axis 3 of a lens 4 the curvature of a surface 5 of which is to be measured. A laser source 6 of a beam of electromagnetic radiation is mounted on the platform 1 such that the beam 7 of radiation is parallel to the optic axis 3 of the lens 4. A second platform 8 is mounted on the first platform 1 so as to be movable in the y-direction only, as shown in Figure 1. Upon the second platform 8 are mounted a detector 9 and a lens 10 arranged to bring a beam 11 of radiation reflected from the surface 5 of the lens 4 to a focus on the detector 9. Also mounted on the platform 8 is a mirror 12 which is adapted to be rotated, by means 13, about an axis 14 which lies in its reflecting surface 15. The mirror rotating means 13 is adapted to provide signals indicative of the orientation of the mirror 12 relative to a reference position. Output signals from the mirror rotating means 13 are applied to an analogue to digital converter 16, as are signals generated by the detector 9. Also applied to the analogue to digital converter 16 are position signals generated by the platform 1. The output from the analogue to digital converter 16 is applied to a store 17 and thence to a processor 18. The output from the processor 18 is displayed on a display unit 19. The processor 18 is controlled by a keyboard 20.

In use, the platform 1 is moved in both the x and y directions until the beam 7 and the optic axis 3 of the lens 4 are coincident and a reference signal is generated, converted and stored. At this position, the mirror 12 would have to be positioned at 45° to the optic axis 3 of the lens 4 if the beam 11 is to be incident upon the detector 9. This provides the reference position of the mirror 12 from which subsequent changes in the orientation of the mirror 12 are measured. The platform 2 is then moved a known distance in the y-direction, and both the platform 8 and the mirror 12 are moved until the beam 11 is incident upon the detector 9. Position signals generated by the mirror rotating means 13 are measured when the output from the detector 9 is a maximum converted and stored, as before. As shown, the mirror 12 is so positioned that the beam 11 is incident upon it at a position which is coincident with the axis 14 about which the mirror 12 is rotated. As a result, the beam 11 enters the detector 9 axially. As the platform 1 is scanned in the y-direction this condition no longer will be true. Either the lens can be figured to ensure paraxial entry of the beam 11 into the detector 9 irrespective of the position of the platform 1, or the platform 8 can be scanned in the y-direction independently of the platform 1, so as to restore the original condition. In this case it is not necessary actually to record the position of the platform 8 when any given measurement of the curvature of the lens 4 is made. The change in orientation of the mirror 12 required to cause the beam 11 to be incident upon the detector 9 is related to the angle, ϑ between the incident and reflected beams 7 and 11, respectively, and readily can be determined by the processor 18.

If the law of curvature of the surface 5 of the lens 4 is known, then knowledge of the angle ϑ and the distance moved by the platform 1 enables one to compute the law of curvature of the surface 5 of the lens 4. If the law of curvature of the surface 5 of the lens 4 is not known, then a series of measurements of values of ϑ for different values of δy still enables it to be deduced. The computed values of the curvature of the surface 5 of the lens 4 may be displayed on the display unit 19.

It will be appreciated that the source 6 and the detector 9 can be interchanged.

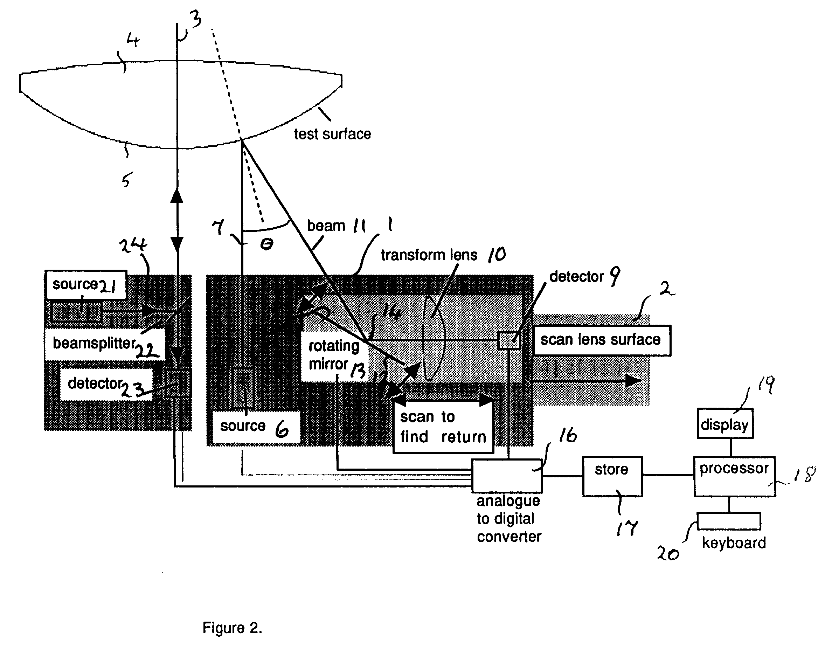

Referring to Figure 2, there is shown an apparatus similar in principle to that described with reference to Figure 1 and in which like components bear like reference numerals. However, in this version of the apparatus, the position of the optic axis 3 of the lens 4 is determined separately by means of a second source of optical radiation 21, a beam splitter 22 and a detector 23 which are mounted on a third platform 24, which can be moved indpendently of the platform 1. Again, position signals generated by the platform 24 as well as the output signal from the detector 23 are digitised, stored and operated upon in the processor 18.

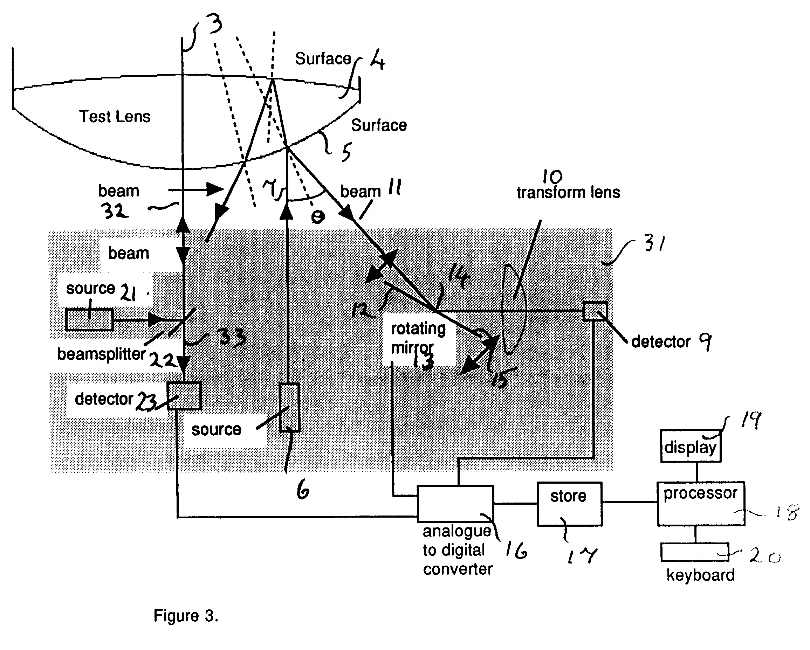

In the embodiments of the invention described with reference to Figures 1 and 2, an optical bench is used in carrying out the measurements. Figure 3 illustrates an embodiment of the invention which is portable and does not require the use of an optical bench. Many of the components of the embodiment of the invention described with reference to Figure 3 are the same as before and bear the same reference numbers. In effect the instrument combines elements of the two previously described embodiments while omitting others.

Referring to Figure 3, a portable embodiment of the invention comprises a base 31 upon which are mounted a radiation source 6 a detector 9, a transform lens 10 and a rotating mirror, drive and position sensing assembly 12, 13, 14 and 15 as before. However, in this case the above components are fixed in position relative to the base 31. A second radiation source 21, beam splitter 22 and detector 23 also are mounted upon the base 31 in such a manner that the outward and reflected reference beams 32 and 33 from the source 21 and to the detector 23, respectively, are parallel to the beam 7 from the source 6 and a known distance from it. There is, therefore no need for the source 6 to generate position signals. The base 31 is incorporated in a case, not shown, so that it can be held by an operator and moved about freely. In use, the instrument is moved about until an output signal from the detector 23 indicates that the reference beams 32 and 33 are coincident with the optic axis 3 of the lens 4. At this moment signals from the rotating mirror drive 13 are recorded, and analysed as before to determine the angle ϑ. The remainder of the measurement is carried out as before, also.

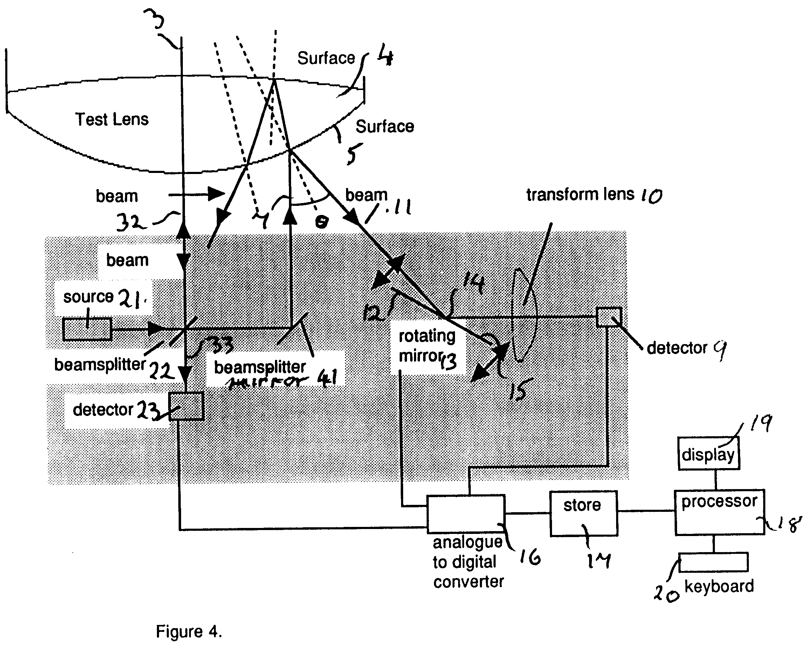

Figure 4 shows another embodiment which is the same as that described with reference to Figure 3 except that the source 6 is replaced by a mirror 41.

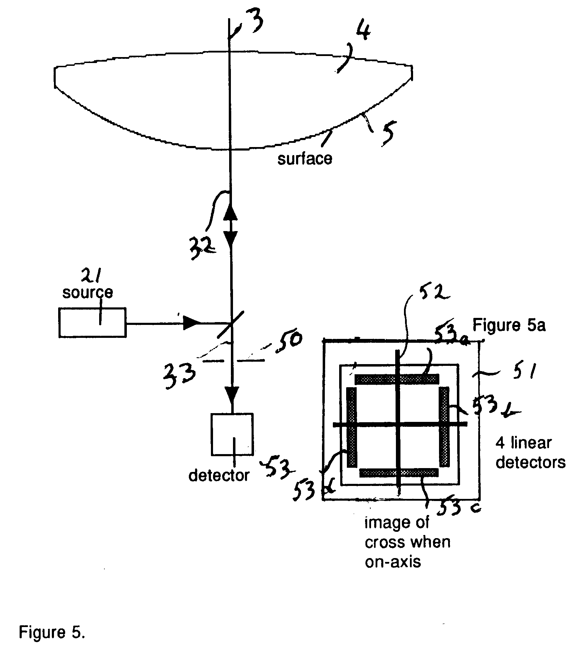

Figure 5 shows an alternative arrangement to that used in the embodiments of Figures 2, 3 and 4 for finding the position of the optic axis 3 of the lens 4. In this embodiment of the invention, the return reference beam 33 is directed through an alignment mask 50, which consists of a transparency 51 which has upon it an alignment cross 52. The detector 53 includes four linear detector elements 53a, 53b, 53c and 53d. The arrangement is such that when the reference beams 32 and 33 are both aligned with the optic axis 3 of the lens 4, the shadow of the cross 52 will fall symmetrically upon the detectors 53a, 53b, 53c and 53d thereby to produce a characteristic output signal the detection of which indicates the required positioning of the instrument with respect to the optic axis 3 of the lens 4.

Of course it will be appreciated that the form of the alignment mask 50 can be reversed, that is to say, it can be generally opaque with a transparent cross.

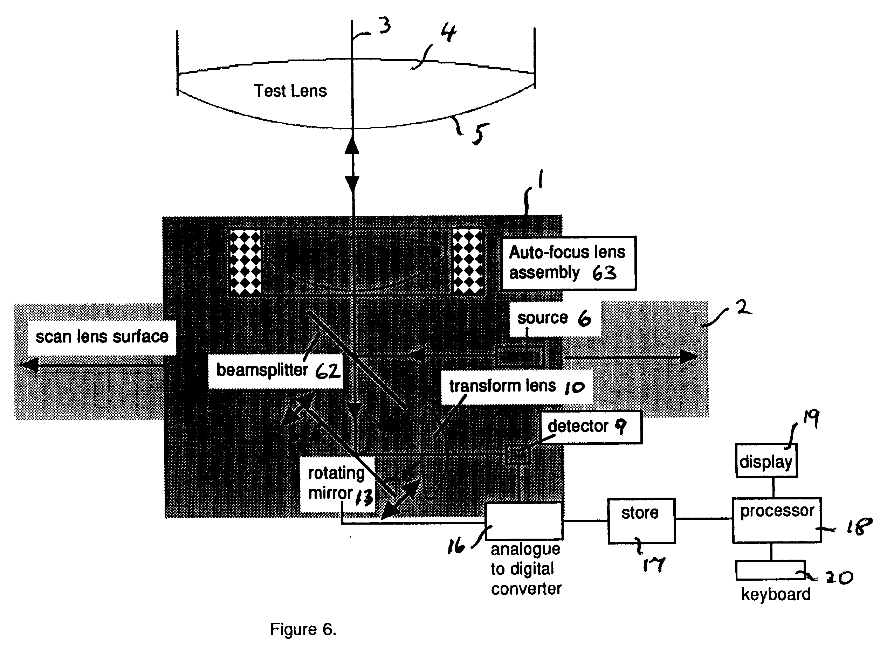

Although the present invention is primarily concerned with the measurement of the curvature of a reflecting surface of an optical element, it can be adapted to measure the quality of the surface of an optical element. Figure 6 illustrates such an embodiment of the invention. Referring to Figure 6, in which components which are similar to those of previously described embodiments bear the same reference numerals, a light source 6 is arranged to illuminate the surface 5 of the lens 4, the equation of curvature of which is known, via a beam splitter 62 and a lens 63 which is arranged to be focused automatically upon the surface 5 of the lens 4 as it is scanned over the surface 5 of the lens 4. As before light reflected from the surface 5 of the lens 4 is directed upon the detector 9 by a rotating mirror, position sensing assembly 12, 13, 14 and 15. The platform 1 is scanned across the surface 5 of the lens 4 by means of the optical bench 1. The processor 18 is programmed with the expected angular deflections of the mirror 12 required to cause the reflected beam 11 to be incident upon the detector 9. Differences between the measured and expected values of the angular deflection of the mirror 12 from its reference position are indicative of the quality of the surface 5 of the lens 4 and may arise from factors such as surface roughness or departures from the true form generated by the equation of curvature.

The invention has been described in relation to the measurement of the front surface 5 of the lens 4. However, by appropriately positioning the relevant components of the apparatus, the curvature of the back surface 5₁ of the lens 4 can be measured using the radiation which is reflected internally at the back surface 5¹ of the lens 4.

Also, the apparatus can be used for measuring the curvature and/or the quality of the surface of a mirror.

## Claims

1. An apparatus for measuring the curvature of a specularly reflecting surface, comprising means for directing a beam of electromagnetic radiation upon a specularly reflecting surface the curvature of which is to be measured, a detector for radiation reflected from the said surface, means for focusing the said reflected radiation upon the detector, a reflecting element arranged to be rotatable about an axis which lies in a reflecting surface of the reflecting element, means for so moving the reflecting element as to cause the radiation reflected from the said surface to be incident upon the detector, means for measuring the angular deflection of the reflecting element from a reference position required to cause the reflected radiation to be incident upon the detector and providing position signals related thereto and means for deriving therefrom a measure of the curvature of the said surface.

2. Apparatus according to Claim 1 wherein the source of the electromagnetic radiation, the reflecting element, the means for rotating the reflecting element, and the means for measuring the angular deflection of the reflecting element from its reference position and providing position signals related thereto are mounted upon a platform which is adapted to be moved relative to an optic axis of an optical element of which the surface the curvature of which is to be measured forms part so as to enable the curvature of the said surface to be determined at any selected position on the said surface of the said optical element.

3. Apparatus according to Claim 2 wherein the platform is mounted upon an optical bench an axis of movement of which is orthogonal to the optic axis of the said optical element.

4. Apparatus according to Claim 3 wherein the optical bench is adapted to provide motion of the platform in three mutually orthogonal directions.

5. Apparatus according to any preceding claim including means for determining the position of the optic axis of the said optical element to facilitate the operation of the apparatus.

6. Apparatus according to Claim 5 wherein the means for determining the position of the optic axis of the said optical element comprises means for directing a beam of electromagnetic radiation at the surface the curvature of which is to be measured, and a detector for radiation reflection from the surface so positioned as to receive radiation reflected from the surface only when the beam of radiation directed at the surface is coincident with the optic axis of the said optical element and producing output signals indicative thereof.

7. Apparatus according to Claim 6 wherein the detector comprises an array of individual detectors arranged to produce output signals indicative of the position within the area encompassed by the array at which the beam of radiation reflected from the surface is incident.

8. Apparatus according to Claim 7 wherein the array of individual detectors comprises four linear arrays of detectors arranged to define a square area and the reflected beam is arranged to be incident upon a mask which includes a fiduciary mark in the form of a symmetrical cross such that the axes of the cross are perpendicular to the linear arrays of detectors, the arrangement being such that output signals are generated indicative of the positions at which the axes of the cross intersect the linear arrays of detectors.

9. Apparatus according to any preceding claim including means for storing data relating to the curvature of a surface of an optical element, and means for comparing the stored data relating to the curvature of the surface with the measured value of the curvature of the surface thereby to determine the quality of the surface of the optical element.

10. Apparatus according to any preceding claim wherein the movable reflecting element is a mirror.

11. Apparatus according to any preceding claim wherein the source of the electromagnetic radiation is a laser.

12. A method of measuring the curvature of a specularly reflecting surface, comprising the operations of directing a beam of electromagnetic radiation at the specularly reflecting surface parallel to the optic axis of an optical element of which the surface forms part, intercepting radiation reflected from the surface with a rotatable reflecting element, varying the orientation of the rotatable reflecting element so as to cause the reflected beam of radiation to be incident upon a detector for the radiation, measuring the separation between the optic axis of the optical element of which the surface forms part and the beam of electromagnetic radiation and the angular deflection of the reflecting element from a reference position to determine the angle of reflection of the radiation from the surface, and deriving therefrom a measure of the curvature of the surface.

13. A method according to Claim 12 including the further operation of comparing the derived measure of the curvature of the surface with stored data representative of a nominal value of the curvature of the surface thereby to ascertain the optical quality of the reflecting surface.

14. A method according to Claim 12 or Claim 13 including the operation of scanning the beam of radiation over the reflecting surface and measuring the angle of reflection of the beam of radiation at a plurality of points on the said surface thereby to determine the curvature of the surface at those points.
